# EUROPEAN PATENT APPLICATION

(11) **EP 2 744 206 A1**
(43) Date of publication of application: **18.06.2014**
(21) Application number: 13190922.8
(22) Date of filing: 30.10.2013
(51) Int. Cl.: H04N 9/31, G03B 21/20, G03B 31/00

(54) **Image projection device with microphone for proximity detection**

(30) Priority: 11.12.2012 JP 2012269915
(71) Applicant: Funai Electric Co., Ltd., Daito-shi Osaka 574-0013 (JP)
(72) Inventor: Oi, Hideo, Osaka Osaka 574-0013 (JP)
(74) Representative: Osha Liang SARL

(57) **Abstract**

An image displaying device (1) for projecting and displaying an image through a light beam includes a microphone (13) configured to detect sounds within an illuminated area (20) illuminated by the light beam that projects the image, and a level controlling portion (12) configured to limit a level of the light beam that projects the image, when a sound has been detected by the microphone (13).

## Description

### [Field of Technology]

The present invention relates to an image displaying device for projecting and displaying an image through a light beam, such as a laser beam.

### [Background Art]

In image displaying devices such as, for example, laser projectors, an image is projected and displayed by laser beams by scanning the laser beams in the vertical and horizontal directions through a scanning device, such as a scanning mirror. Such image displaying devices are used in presentations, where videos or images are provided by the image displaying device to attendees. The videos or images are projected and displayed on a screen. Based on the video or image material presenter provides explanations to the attendees.

Patent Citation 1 discloses a presentation system wherein, when an attendee inputs a specific vocalization through a microphone into a voice recognition processing portion to move or stop, or the like, a point image, the voice recognition processing portion generates a pointer controlling signal in accordance with that specific vocalization, an image processing portion calculates a point coordinate on the visible image depending on the pointer controlling signal, a point image is generated and combined with the projected image in accordance with the point coordinates, and the combined image is projected onto a screen by an LCD projector.
However, in Patent Citation 1 there is no disclosure of the concept of detection of voice in relation to the area illuminated by the projected beam.

Patent Citation 2 discloses a projector system provided with a microphone device, a projector controlling device, and a projector: wherein the microphone device is provided with: a voice inputting portion for picking up a voice and a communicating portion, as a first outputting portion, for outputting voice data of a voice that has been picked up; the projector controlling device is provided with a first inputting portion for inputting voice data, a voice recognizing portion for converting the voice data into voice recognition data and recognizing keywords using this voice recognition data, a command generating portion for generating commands in accordance with recognized keywords, and a second outputting portion for outputting the generated commands to the projector; and the projector is provided with a communicating portion as a second inputting portion for inputting commands, a projector controlling portion for controlling the projector based on the inputting commands, and a projector function operating portion by which to operate the projector.
However, in Patent Citation 2 there is no disclosure of the concept of detection of voice in relation to the area illuminated by the projected beam.

Patent Citation 3 discloses a presentation system wherein a digital camera performs imaging with the individual students in a classroom included in the photographic subjects, and uses optical following to detect an action wherein a student who is about to speak rises from his/her seat, or an action wherein a mouth is moving, to identify the location of a speaker in a captured image, to extract the speaker's face portion from the image data, and wherein a PC uses a projector to display educational material on a screen, wherein, when the extracted image data is transmitted from the digital camera, an image of the face of the speaker is displayed superimposed on the screen, based on the extracted image data.
However, in Patent Citation 3 there is no disclosure of the concept of detection of voice in relation to the area illuminated by the projected beam.

### [Patent Citations]

[Patent Citation 1] Japanese Unexamined Patent Application Publication 2003-44076
[Patent Citation 2] Japanese Unexamined Patent Application Publication 2005-241971
[Patent Citation 3] International Patent Application Publication WO-2011-013605

When an image displaying device projects an image using a beam of light, such as a laser beam, a space is formed between the image displaying device emitting the light beam and a projection plane, such as a screen onto which the image is projected using the light beam. This space is an area illuminated by the light beam that arrives at the projection plane from the image displaying device.

When this type of image displaying device is used, for example during a presentation, the attendees, the speaker, or other people may enter into this space, thus experiencing discomfort for being blinded by the light beam.

### [Summary of the Invention]

One or more embodiments of the present invention provide an image displaying device for projecting and displaying an image through a light beam. The image displaying device may comprise: a microphone configured to detect sounds within an area illuminated by the light beam that projects the image; and a level controlling portion configured to limit a level of the light beam that projects the image, when a sound has been detected by the microphone.
The level of the light beam may be limited by a predetermined sound, such as, for example, a noise from an object, a footstep noise, a voice, a word, a phrase, etc, caused by a person entering into the illuminated area, *i.e.* the area illuminated by the light beam.

According to one or more embodiments, a variety of different methods may be used to limit the level of the light beam. For example, the level controlling portion may be configured to limit a level of the light beam by reducing the brightness or the intensity of the light beam, zeroing the brightness or intensity of the light beam, reducing the light emission output of the light source, stopping the light emission output of the light source, darkening the projected image through applying a filter, or the like. In this manner, the light beam will not bother an individual who enters into the illuminated area.
According to one or more embodiments, the microphone may detect voices or any sort of sound indicating that a person has entered into the area illuminated by the light beam, so as to limit the level of the light beam.

The image displaying device according to one or more embodiments of the present invention may further comprise: a recognizing portion configured to recognize a voice, or any sound indicating that a person has entered into the area illuminated by the light beam, from the sounds detected by the microphone; and an evaluating portion configured to evaluate whether the recognizing portion has recognized a voice, or any sound indicating that a person has entered into the area illuminated by the light beam. The level controlling portion may control the level of the light beam that projects the image in response to the evaluation, by the evaluating portion, that a voice, or any sound indicating that a person has entered into the area illuminated by the light beam, has been recognized.
In one or more embodiments, the level of the light beam may be controlled by detecting the entrance of a person into the area illuminated by the light through a sound, for example through a voice.

Furthermore, the image displaying device according to one or more embodiments of the present invention may comprise an evaluating portion which may be configured to evaluate whether or not a voice that has been recognized by the recognizing portion matches a predetermined word, for example a word that has been set in advance. Further, the image displaying device according to one or more embodiments of the present invention may comprise a level controlling portion which may be configured to limit the level of the light beam that projects the image in response to the evaluation, by the evaluating portion, that there is a match between the recognized voice and the predetermined word.
As a result, the level of the light beam may be limited by a predetermined word expressed by an individual who has entered into the area illuminated by the light. For example, the predetermined word may be a word used in an emergency, such as "Wah!," "Bright!," or the like.

The image displaying device according to one or more embodiments of the present invention may comprise any type of microphones. For example, the microphone configured to detect sounds within the illuminated area may be a directional microphone. According to one or more embodiments, the sonic collection area in which the microphone detects sounds may be substantially the same as the illuminated area illuminated by the light beam. In this manner, it is possible to improve the precision of limiting of the light beam level through sound within the illuminated area.
According to one or more embodiments, a sonic collection area substantially identical to the illuminated area may be formed by a plurality of microphones, which may for example be arranged along the perimeter of the illuminated area and/or throughout the illuminated area. According to these embodiments, each microphone may have a relatively small sonic collection area.

According to one or more embodiments of the present invention, the image displaying device may comprise a microphone, for example a directional microphone, and the sonic collection area in which the microphone detects sounds may be substantially the same as an area in which a person may be present. For example, an area in which a person may be present may be defined by a predetermined height range, for example a height range representative of person heights. In such a case, the sonic collection area may be set to have a height falling within this predetermined height range. In this manner, it is possible to improve the precision of limiting of the light beam level through a sound within the illuminated area.
According to one or more embodiments, the image displaying device may comprise an additional microphone configured to detect sounds in an additional sonic collection area, which may be for example outside the illuminated area. The additional microphone may be for example a directional microphone.
According to one or more embodiments, the microphone configured to detect sounds outside the illuminated area and the microphone configured to detect sounds within the illuminated area are arranged on opposite sides of the image displaying device.[0015] According to one or more embodiments of the present invention, the image displaying device comprises a laser projector projecting an image using a laser beam. According to one or more embodiments, the image displaying device comprises a projector projecting an image through another type of light beam.
The laser projector may comprise, as scanning means, an MEMS (Micro Electro Mechanical System) scanning mirror. An MEMS scanning mirror is beneficial in reducing size, reducing power consumption, increasing the speed of processing, and so forth.
Further embodiments are defined by the claims.
One or more embodiments of the present invention can prevent or mitigate problems such as the feeling of discomfort caused by a bright light beam directed to an individual who enters into a space between an image displaying device and the projection plane.

### [Brief Descriptions of the Drawings]

FIG. 1 is a structural drawing of an image displaying device according to one or more embodiments of the present invention.
FIG. 2 is a perspective diagram showing an external view of an image displaying device according to one or more embodiments of the present invention.
FIG. 3 is a conceptual diagram for explaining the illuminated area and sonic collection area of an image displaying device according to one or more embodiments of the present invention.
FIG. 4 is a conceptual diagram for explaining the illuminated area and sonic collection area of an image displaying device according to one or more embodiments of the present invention.
FIG. 5 is a diagram for explaining the level limiting procedure in an image displaying device according to one or more embodiments of the present invention.
FIG. 6 is a conceptual diagram for explaining a situation wherein an image displaying device according to one or more embodiments of the present invention is used.
FIG. 7 is a conceptual diagram for explaining an example configuration of a sonic collection area of an image displaying device according to one or more embodiments of the present invention.
FIG. 8 is a conceptual diagram for explaining an example configuration of a sonic collection area of an image displaying device according to one or more embodiments of the present invention.
FIG. 9 is a conceptual diagram for explaining an example of application of an image displaying device according to one or more embodiments of the present invention.
FIG. 10 is a conceptual diagram for explaining an example of application of an image displaying device according to one or more embodiments of the present invention.

### [Detailed Description of Embodiments of the Invention]

The present invention will be explained in detail based on one or more embodiments of an image display device, such as for example a laser projector.
While embodiments of the present invention can be applied to a variety of image displaying devices, one example of a configuration of a laser projector that is provided with an MEMS mirror for reflecting a laser beam will be explained as one example.

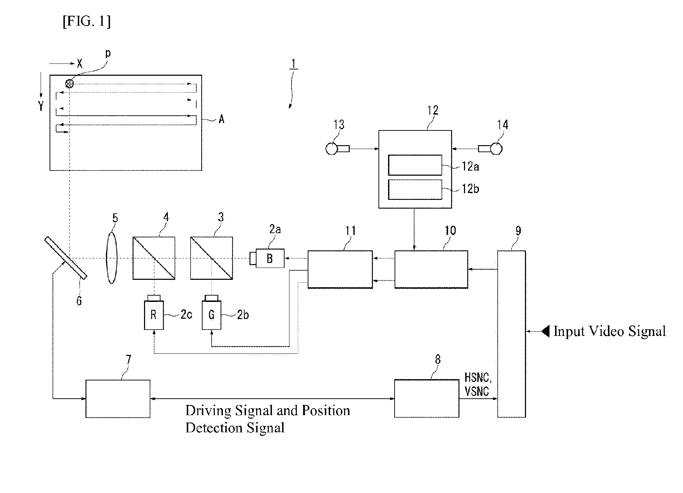

A laser projector 1according to one or more embodiments as illustrated in FIG. 1 may comprise laser beam sources 2a through 2c, various types of optical elements 3 through 5, an MEMS scanning mirror 6, various types of driving and controlling units 7 through 12, and directional microphones 13 and 14.
The laser projector 1 may combine light beams of individual red, blue, and green color components and projects them onto a projection plane A, such as a screen or a wall, to display, on the projection plane A, a color image in accordance with a video signal.

The respective laser beam sources 2a through 2c may be driven mutually independently by driving currents that are supplied separately from a laser driver 11. As a result, laser beams of specific wavelengths may be emitted, such as a blue component (B) from the laser beam source 2a, a green component (G) from the laser beam source 2b, and a red component (R) from the laser beam source 2c.

Dichroic mirrors 3 and 4 may pass only laser beams of specific wavelengths and reflect the laser beams otherwise, to combine the laser beams of the individual color components emitted from the individual laser beam sources 2a through 2c. Specifically, the laser beams of the blue component and the green component emitted from the laser beam sources 2a and 2b may be combined by the dichroic mirror 3 on the upstream side of the beam path and emitted to the dichroic mirror 4 on the downstream side of the beam path. In the dichroic mirror 4, this emitted combined beam may further combined with the laser beam of the red component laser beam emitted from the laser beam source 2c, to be emitted as the final color beam. The emitted color beam may pass through a lens 5 to be incident on a scanning mirror 6.

The MEMS scanning mirror 6 may be dislocated to scan by a scanning mirror driver 7 that inputs a driving signal from a scanning mirror controlling portion 8, and the color beam incident thereon may be reflected in accordance with the deflection angle thereof, to be projected onto the projection plane A. This scanning mirror 6 may have two-dimensional degrees of freedom in regards to the horizontal direction X and the vertical direction Y of the projection plane A, and may form an image on the projection plane A through linear sequential scanning in response to these two-dimensional dislocations. This linear sequential scanning may be performed continuously within one frame through repeatedly advancing a laser spot p in one direction in a horizontal line on the projection plane A and returning the laser spot p in the opposite direction on the next horizontal line immediately thereunder.

A scanning mirror driver 7 may drive the scanning mirror 6 in accordance with a specific scanning sequence through providing a driving current to the scanning mirror 6. Along with this, the scanning mirror driver 7 may detect the position (the deflection angle) in the scanning mirror 6. The position information detected may be sent, as a position detection signal, to a scanning mirror controlling portion 8.

The scanning mirror controlling portion 8 may control the scanning mirror 6 so as to cause the laser beam incident on the scanning mirror 6 to scan a specific image region at a specific frequency. This control may be performed through the scanning mirror controlling portion 8 outputting a driving signal to the scanning mirror driver 7. Moreover, the scanning mirror controlling portion 8 may generate a horizontal synchronization signal HSNC and a vertical synchronization signal VSNC based on the position detection signal from the scanning mirror driver 7. The emission timings of the laser beams from the laser beam sources 2a through 2c may require synchronization with the phase control of the scanning mirror 6, and the horizontal and vertical synchronization signals HSNC and VSNC may be used in order to produce this synchronization.

A video processing portion 9 may progressively write an input video signal (video data), supplied from an external device, such as a PC, to a frame buffer (not shown) with a timing determined by a synchronization signal supplied from the external device. Moreover, the video processing portion 9 may sequentially read out, with timing determined by the horizontal and vertical synchronization signals HSNC and VSNC supplied by the scanning mirror controlling portion 8, the video data stored in the frame buffer, and send it to a laser controlling portion 10.

The laser controlling portion 10, based on the video data sent sequentially from the video processing portion 9, may determine the driving currents for the respective pixels, to determine the waveform patterns that are to be applied thereto. The respective laser beam sources 2a through 2c may be controlled and driven individually, through the laser driver 11, based on the driving currents and waveform patterns established for the individual color components.

The laser driver 11, in relation to the respective color components, may modulate the driving current using the waveform patterns outputted from the laser controlling portion 10, and output the modulated driving currents to the laser beam sources 2a through 2c. As a result, the laser beam sources 2a through 2c may emit laser beams of power levels in accordance with the gradations that are to be displayed, following the waveform patterns. The final color beam, wherein the emitted beams of the individual color components are combined, may be directed toward the scanning mirror 6, wherein the position is controlled synchronized to the emissions of the laser beams, to be projected to specific pixel positions on the projection plane A.

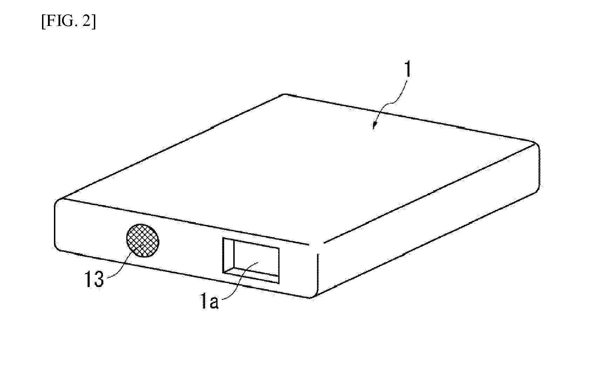

In one or more embodiments as illustrated in FIG. 2, a directional microphone 13 may be provided facing substantially the same direction as a window 1a provided on the front face side of the laser projector 1, through which the projected beam is emitted. That is, the directional microphone 13 may be provided facing substantially the same direction as the projected laser beam that is emitted from the window 1a, facing toward the projection plane A.
In one or more embodiments, a further microphone 14, for example a directional microphone, may be provided. The directional microphone 14 may be for example provided on the back face side of the laser projector 1.

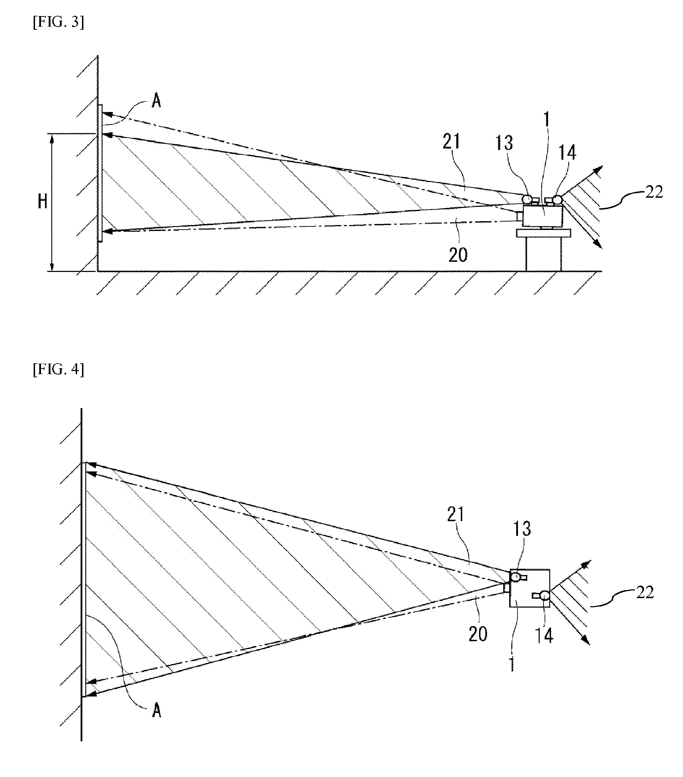

An example of the relationship between an illuminated area 20 illuminated by the projected laser beam emitted from the window 1a of the laser projector 1 and sonic collection area 21 defined by the area in which the directional microphone 13 collects sounds is shown in FIG. 3 and FIG. 4.
In one or more embodiments, the laser beam emitted from the window 1a in the space that ends up at the projection plane A may produce an illuminated area 20 wider toward the projection plane A side from the window 1a, and the directional microphone 13 may be arranged so that the sonic collection area 21 will be substantially the same as the illuminated area 20.

That is, the directional microphone 13 may detect sound produced within the illuminated area 20 wherein the laser beam exists but does not detect sound that is produced outside of the area 20. When the sonic collection area 21 is substantially the same as the illuminated area 20, voices produced by people outside of the illuminated area 20 will not be detected by the directional microphone 13, making it possible to detect the target voice with the directional microphone 13 with good accuracy.
In one or more embodiments of the present invention, the sonic collection area 21 need not be strictly identical to the illuminated area 20, and some degree of discrepancy can be tolerated.

Moreover, in one or more embodiments of the present invention, the sonic collection area 21 defined by the directional microphone 13 from the floor may be predetermined, for example as a function of the size of the area in which one or more persons may be present. For example, the height H of the sonic collection area 21 may have about the same height of a person (for example, two meters). The height of the sonic collection area 21 may be limited to a predetermined value, for example to the height of a person, and the height of the illuminated area 20 may be higher than the height of the sonic collection area 21. In this manner, it is possible to detect the targeted sound with good accuracy, using the directional microphone 13, without detecting sound from sources located outside the area in which people may be present.

Moreover, in one or more embodiments of the present invention, the image display device, for example in the form of a laser projector, may comprise a further microphone, for example a directional microphone 14. The directional microphone 14 may detect sounds in a sonic collection area 22. For example, the sonic collection area 22 may face the opposite direction from the laser projector 1 with respect to the sonic collection area 21.
According to one or more embodiments of the present invention, the directional microphone 14 may be used to detect sounds, for example vocalizations, produced by individuals located behind the laser projector 1 (such as a speaker using the laser projector 1, an operator running the laser projector 1, or the like).

The level controlling portion 12 may comprise a recognizing portion 12a for performing voice recognition based on the inputted voice signal, for example by inputting the voice signals detected by the directional microphone 13 and the directional microphone 14. The level controlling portion 12 may further comprise an evaluating portion 12b for evaluating whether or not a word recognized through voice recognition in the recognizing portion 12a matches a predetermined word, which has been for example set in advance. The evaluating portion 12b may be set in advance with words that are exclaimed by people in an emergency such as "Ah!," "Whoa!," "Stop!," or the like.

Consequently, the level controlling portion 12 may output a command signal to the laser controlling portion 10 for limiting the light emission level of the laser light sources 2a through 2c in response to an evaluation by the evaluating portion 12b when a voice matching a word that has been set in advance is detected by the directional microphone 13 and/or the directional microphone 14.
When an interrupt command signal is inputted based on the aforementioned vocalization, the laser controlling portion 10 may reduce the driving currents to limit the light emission levels of the laser beam sources 2a through 2c.

According to one or more embodiments, the light emission levels of the laser beam sources 2a through 2c may be controlled by stopping the emission of light from the laser beam sources 2a through 2c, and the light emission levels from the laser beam sources 2a through 2c may be limited through reducing the intensity or brightness of the light emitted from the laser beam sources 2a through 2c to no more than a predetermined level, such as for example a level by which a person would not feel blinded.
The light emission levels of the laser beam sources 2a through 2c may be limited in order to limit the level of the light beams that project the image, for example in the event of the detection of a voice by a directional microphone. According to one or more embodiments of the present invention the light emission levels from the laser beam sources 2a through 2c may be limited through, for example, the video processing portion 9 or the laser controlling portion 10, reducing the pixel values of the image that is projected.

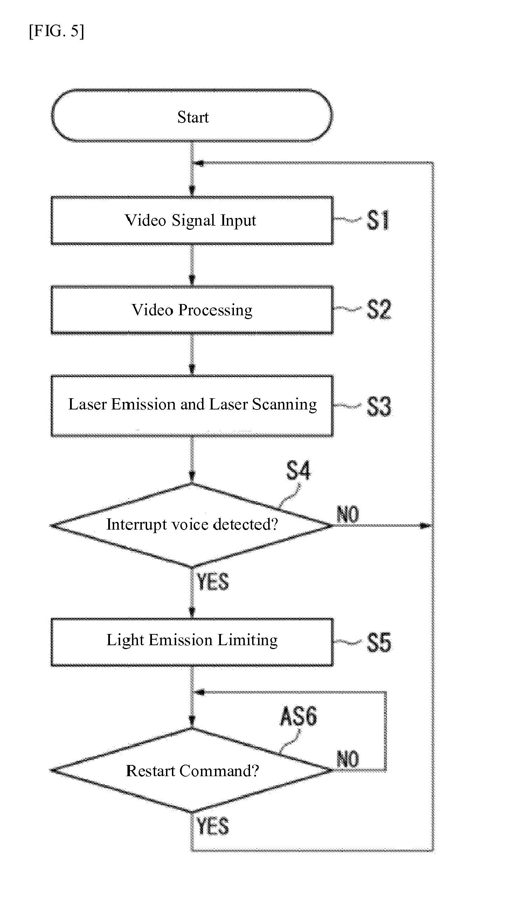

FIG. 5 illustrates an example of a sequence for the image displaying procedure for the laser projector 1 according to one or more embodiments.
When the image displaying procedure is started in the laser projector 1, then, as described above, the video processing portion 9 may perform a procedure for inputting a video signal inputted from the outside, and perform video processing (Steps S1 and S2). Light may be emitted from the laser beam sources 2a through 2c and the scanning mirror 6 may be scanned (Step S3), so that the image is projected and displayed by the laser beams on the projection plane A.

If a voice that has been set in advance (an interrupt voice) from the directional microphone 13 and/or the directional microphone 14 is detected when the image displaying procedure is being performed (Step S4), then the level controlling portion 12 may control the laser controlling portion 10 to control the light emission levels of the laser beam sources 2a through 2c (Step S5).
Given this, the control of the light emission in this way may be terminated through a restart instruction, inputted by an operator, or the like (Step S6), to return to the normal image displaying procedure.

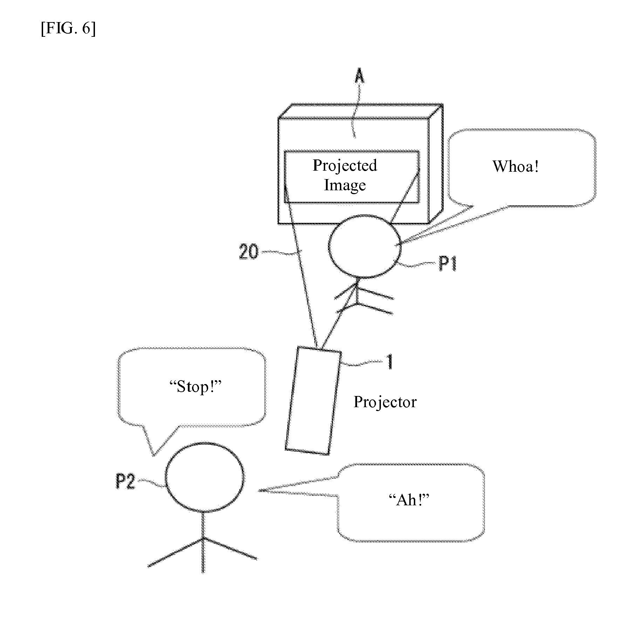

If, for example, predetermined words, such as for example "Whoa!," "Ah!," and "Stop!", are set in the evaluating portion 12b, as illustrated in FIG. 6, and one of the predetermined words, for example "Whoa!", produced in an exclamation by a person P1 who has entered into the illuminated area 20 is detected by the directional microphone 13, then the light emission levels of the laser beam sources 2a through 2c may be controlled thereby.
Moreover, if a speaker or an operator P2 who is behind the laser projector 1 exclaims a predetermined word, such as for example "Ah!" or "Stop!", because the person P1 has entered into the illuminated area 20, that word may be detected by the directional microphone 14, and the light emission levels of the laser beam sources 2a through 2c may be limited thereby.

Although in the embodiments defined above vocalizations are detected by directional microphones and the light emission vocalizations of light sources are limited in response to recognition of predetermined words in those voices, according to one or more embodiments a level controlling portion may control the light emission levels (the light beam levels) in response to the detection, by a microphone, of any type of noise produced within the illuminated area 20 (that is, the sonic collection area 21), using a microphone that does not have any particular directionality. That is, depending on the requirements for, for example, precision of control, product design, and the like, according to one or more embodiments of the present invention, the image displaying device may not comprise the recognizing portion 12a and the evaluating portion 12b as described above.

Moreover, although in the embodiments defined above vocalizations are detected by directional microphones and the light emission vocalizations of light sources are limited in response to recognition of predetermined words in those voices, according to one or more embodiments a level controlling portion may control the light emission levels in response to the recognition of a voice from a sound, detected by a microphone, produced within the illuminated area 20 (that is, the sonic collection area 21), using a microphone that does not have any particular directionality. That is, according to one or more embodiments of the present invention, depending on the requirements for precision of control or product design, the evaluating portion 12b may evaluate whether or not some type of voice has been recognized, and the light emission levels of the light source (the levels of the light beams) may be limited in response to the evaluating portion 12b determining that a voice has been recognized.

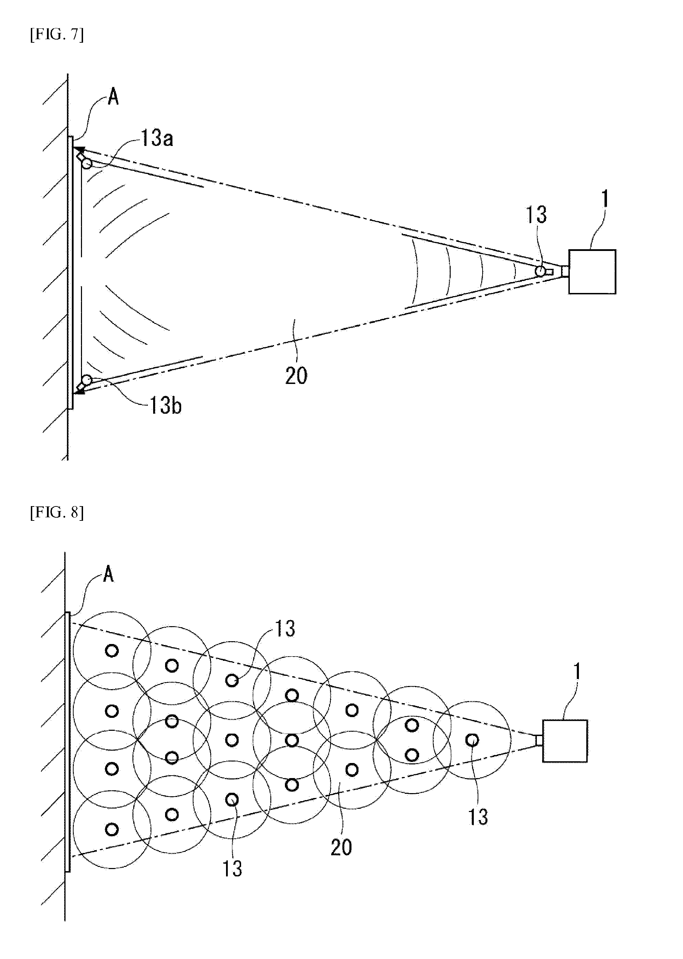

Although in the embodiments defined above a sonic collection area 21 essentially identical to the illuminated area 20 is formed from a single directional microphone 13 provided in the projector 1, according to one or more embodiments a variety of different forms may be used. For example a sonic collection area 21 that is substantially identical to the illuminated area 20 may be formed by respective directional microphones 13, 13a, and 13b, which may be for example arranged at three corners of the illuminated area 20, as illustrated in FIG. 7, or through covering the illuminated area 20 by a higher number of directional microphones 13, each having a relatively small sonic collection area, as illustrated in FIG. 8.

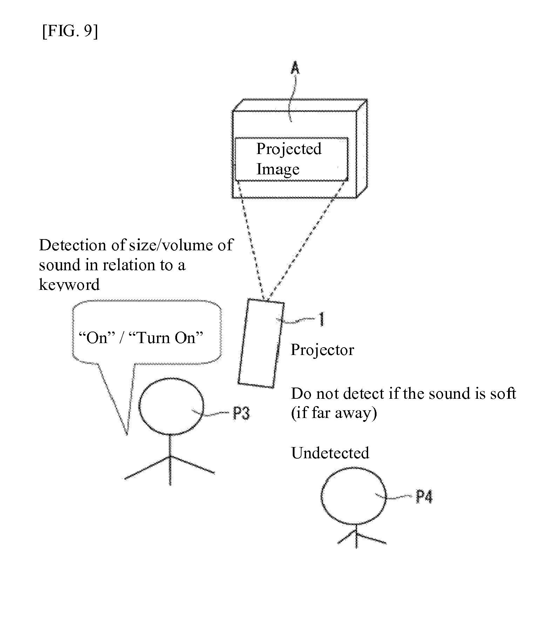

According to one or more embodiments, it is possible to modify the details of processing depending on words that have been recognized, to perform voice-recognition on the locations of a speaker or of a presenter and attendees in a presentation, to recognize the positions and the words that are vocalized. For instance, as illustrated in the example of FIG. 9, the directional microphone 13 or 14 may detect vocalization such as "On!" or "Turn On!" from an attendee P3, and, in response thereto, turn on the projector 1 to project the image. Moreover, in this case, a threshold value for the level at which the directional microphones 13 and 14 perform detection may be set so as to not detect faint sounds, thereby making it possible to prevent erroneous operation of the laser projector 1 through a voice of an attendee P4 who is speaking softly or is relatively far away.

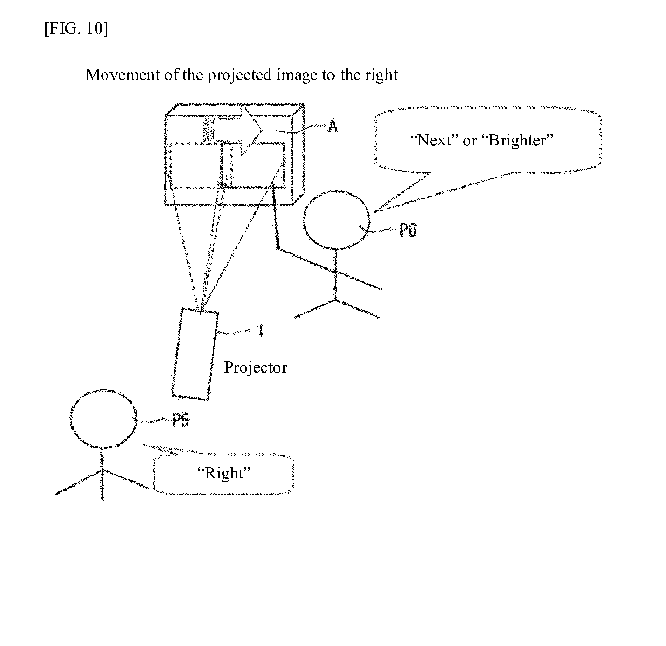

Moreover, as illustrated in the example of FIG. 10, the direction of projection may be changed depending on predetermined sounds, for example vocalizations such as "Higher," "Lower," "Right," or "Left," from an attendee P5 or a presenter P6. The projected scope may be varied in response to predetermined sounds, for example vocalizations such as "Wider" or "Narrower." Further, the brightness may be modified in response to predetermined sounds, for example vocalizations such as "Brighter" or "Less Bright". Additionally, an external video signal corresponding to a subsequent slide may be displayed, instead of a mouse click, in response to a predetermined sound, for example a vocalization such as "Next," or the like, by the presenter P6.
While the invention has been described with respect to a limited number of embodiments, those skilled in the art, having benefit of this disclosure, will appreciate that other embodiments can be devised which do not depart from the scope of the invention as defined by the claims. Furthermore, those of ordinary skill in the art would appreciate that certain components or "portions" of one or more embodiments of the present invention may be implemented by a circuit, processor, etc. using known methods. Accordingly, the scope of the invention should be limited only by the attached claims.

### [Explanation of Reference Numbers]

1: Laser Projector
2a through 2c: Laser Beam Source Elements
10: Laser Controlling Portion
12: Level Controlling Portion
12a: Recognizing Portion
12b: Evaluating Portion
13, 14: Directional Microphones
20: Illuminated Area
21: Sonic Collection Area
A: Projection Plane

## Claims

1. An image displaying device (1) for projecting and displaying an image through a light beam, comprising:
a microphone (13) configured to detect sounds within an illuminated area (20) illuminated by the light beam that projects the image; and
a level controlling portion (12) configured to limit a level of the light beam that projects the image, when a sound has been detected by the microphone (13).

2. The image displaying device (1) of claim 1, further comprising:
a recognizing portion (12a) configured to recognize a predetermined sound from the sounds detected by the microphone (13); and
an evaluating portion (12b) configured to evaluate whether the recognizing portion (12a) has recognized the predetermined sound, wherein
the level controlling portion (12) is configured to control the level of the light beam that projects the image in response to the evaluating portion (12b) having evaluated that the predetermined sound has been recognized.

3. The image displaying device (1) of claim 2, wherein the predetermined sound is a noise from an object, a footstep noise, or a voice.

4. The image displaying device (1) of claim 3, wherein
the evaluating portion (12b) is configured to evaluate whether or not a voice that has been recognized by the recognizing portion (12a) matches a predetermined word, and
the level controlling portion (12) is configured to limit the level of the light beam that projects the image in response to the evaluating portion (12b) having evaluated that there is a match between the recognized voice and the predetermined word.

5. The image displaying device (1) of any one of claims 1- 4, further comprising:
a light source (2a-2c) configured to emit the light beam, wherein
the level controlling portion (12) is configured to control the level of the light beam that projects the image by limiting the light emission output of the light source (2a-2c).

6. The image displaying device (1) of any one of claims 1-5, further comprising an additional microphone (14) configured to detect sounds outside the illuminated area (20).

7. The image displaying device of any one of claims 1-6, wherein
each of the microphone (13) and of the additional microphone (14) is a directional microphone.

8. The image displaying device (1) of any one of claims 1-7, wherein a sonic collection area (21) in which the microphone (13) detects sounds is substantially identical to the illuminated area (20).

9. The image displaying device (1) of any one of claims 1-8, wherein
a sonic collection area (21) in which the microphone (13) detects sounds is substantially the same as an area in which a person may be present.

10. The image displaying device (1) of claim 6 or claim 9 when dependent from claim 6, wherein a sonic collection area (22) in which the additional microphone (14) detects sounds is substantially the same as an area in which a person may be present.
